# EUROPEAN PATENT APPLICATION

(11) **EP 1 517 164 A1**
(43) Date of publication of application: **23.03.2005**
(21) Application number: 04021968.5
(22) Date of filing: 15.09.2004
(51) Int. Cl.: G02B 6/00

(54) **Surface light source**

(30) Priority: 22.09.2003 JP 2003330102
(71) Applicant: ALPS ELECTRIC CO., LTD., Tokyo 145-8501 (JP)
(72) Inventor: Miyasaka, Yasuhiro, Ota-ku Tokyo 145-8501 (JP)
(74) Representative: Klunker . Schmitt-Nilson . Hirsch

(57) **Abstract**

Each LED (17) is a discrete LED in which an LED body (17a) that emits light is combined with a wire lead (17b) for electrically connecting the LED body (17a) to an electrical circuit on a circuit board (18). A positioning unit for positioning the LED (17) with respect to a light guide plate includes the wire lead (17b), an insertion hole (15b) which is provided in a mounting portion (15a) of a holder (15) and through which the wire lead (17b) extends, and an engaging portion (17c) provided in the wire lead (17b) so as to engage with an edge of the insertion hole (15b).

## Description

### BACKGROUND OF THE INVENTION

### 1. Field of the Invention

The present invention relates to a surface light source which is provided as an edge-lighting backlight in, for example, a liquid crystal display device and which includes a light guide plate, an LED (light-emitting diode) provided near a light incident surface of the light guide plate to illuminate the light incident surface, and a positioning means for positioning the LED with respect to the light guide plate.

### 2. Description of the Related Art

Japanese Unexamined Patent Application Publication No. 2001-67919 (paragraphs 0003 to 0006, FIGS. 8 and 9) discloses a surface light source including a light guide plate having a light incident surface on which light is incident and a light-emitting surface from which the light is emitted, a support for supporting the light guide plate, LEDs disposed near the light incident surface of the light guide plate to illuminate the light incident surface, and a lead member for electrically connecting the LEDs to an electrical circuit.

In this type of surface light source, a plurality of LED chips are connected to an LED substrate, and the LED substrate is joined to the light incident surface of the light guide plate. That is, the LED substrate functions as a positioning means for positioning the LED chips with respect to the light guide plate. The lead member for electrically connecting the LED chips to the electrical circuit is constituted by the LED substrate, and an FPC (flexible printed circuit board) connected to the LED substrate at one end and to the electrical circuit at the other end.

In the above-described conventional surface light source, a special component, that is, the LED substrate, is needed to position the LED chips, and this increases the number of components.

### SUMMARY OF THE INVENTION

In view of the above circumstances, an object of the present invention is to provide a surface light source that allows light-emitting diodes to be positioned without using any special component and without increasing the number of components.

In order to achieve the above object, according to one aspect, the present invention provides a surface light source including a light guide plate having a light incident surface on which light is incident and a light-emitting surface from which the light is emitted; a support for supporting the light guide plate; a discrete light-emitting diode disposed near the light incident surface of the light guide plate to illuminate the light incident surface, the light-emitting diode including a diode body for emitting the light, and a wire lead provided integrally with the diode body; a positioning unit for positioning the light-emitting diode with respect to the light guide plate; and an electrical circuit provided in the support to light the light-emitting diode. The wire lead electrically connects the diode body to the electrical circuit, and the positioning unit includes an insertion hole which is provided in the support and through which the wire lead extends, and an engaging portion provided integrally with the wire lead so as to engage with an edge of the insertion hole.

In this surface light source, the light-emitting diode is a discrete light-emitting diode in which the diode body that emits light is combined with the wire lead, and the positioning unit includes the insertion hole which is provided in the support and through which the wire lead extends, and the engaging portion that is provided integrally with the wire lead so as to engage with the edge of the insertion hole of the support. That is, the discrete light-emitting diode and the support include the positioning unit. As a result, a special component for positioning the light-emitting diode is unnecessary, and therefore, the number of components is not increased.

According to another aspect, the present invention provides a surface light source including a light guide plate having a light incident surface on which light is incident and a light-emitting surface from which the light is emitted; a support for supporting the light guide plate; a discrete light-emitting diode disposed near the light incident surface of the light guide plate to illuminate the light incident surface, the light-emitting diode including a diode body for emitting the light, and a wire lead provided integrally with the diode body; a positioning unit for positioning the light-emitting diode with respect to the light guide plate; and an electrical circuit provided in the support to light the light-emitting diode. The wire lead electrically connects the diode body to the electrical circuit, and the positioning unit includes an insertion hole which is provided in the support and through which the wire lead extends, and a side face of the diode body.

In this surface light source, the light-emitting diode is a discrete light-emitting diode in which the wire lead is combined with the diode body that emits light, and the positioning unit includes an insertion hole which is provided in the support and through which the wire lead extends, and the side face of the diode body. That is, the discrete light-emitting diode and the support include the positioning unit. As a result, a special component for positioning the light-emitting diode is unnecessary, and therefore, the number of components is not increased.

Preferably, the support includes a circuit board on which the electrical circuit is provided, and a holder disposed on the circuit board to hold the light guide plate, and the diode body is electrically connected to the electrical circuit via the wire lead that extends through insertion holes provided in the holder and the circuit board.

Since the discrete light-emitting diode includes the wire lead, it is possible to easily respond to a change in the distance between the support and the circuit board by cutting the wire lead to an appropriate length without using a special component (e.g., a lead or a flexible circuit board).

As described above, in the present invention, since the discrete light-emitting diode and the support include the positioning unit, a special component for positioning the light-emitting diode is unnecessary, and the number of components is not increased.

Further objects, features and advantages of the present invention will become apparent from the following description of the preferred embodiments with reference to the attached drawings.

### BRIEF DESCRIPTION OF THE DRAWINGS

FIG. 1 is a front view of a controller of a car air conditioner in which a surface light source according to an embodiment of the present invention is provided;
FIG. 2 is an exploded perspective view of the controller shown in FIG. 1;
FIG. 3 is a transverse sectional view of the embodiment;
FIG. 4 is a sectional view, taken along line IV-IV in FIG. 3;
FIG. 5 is an enlarged view of a section A in FIG. 3; and
FIG. 6 is a transverse sectional view of a positioning means different from a positioning means shown in FIG. 3.

### DESCRIPTION OF THE PREFERRED EMBODIMENTS

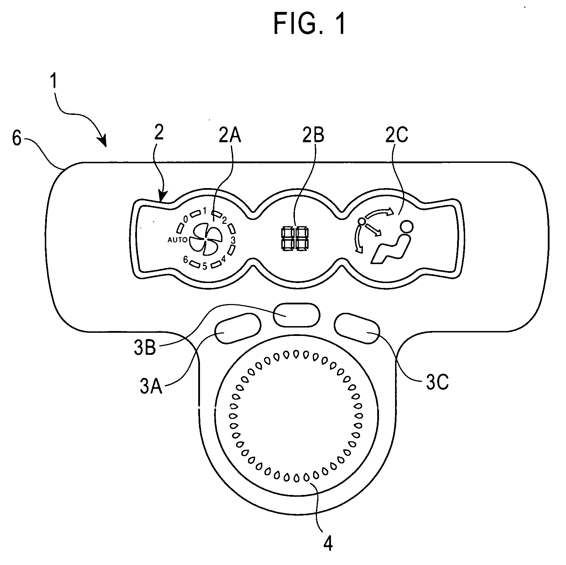

A surface light source according to an embodiment of the present invention will be described below with reference to FIGS. 1 to 5.

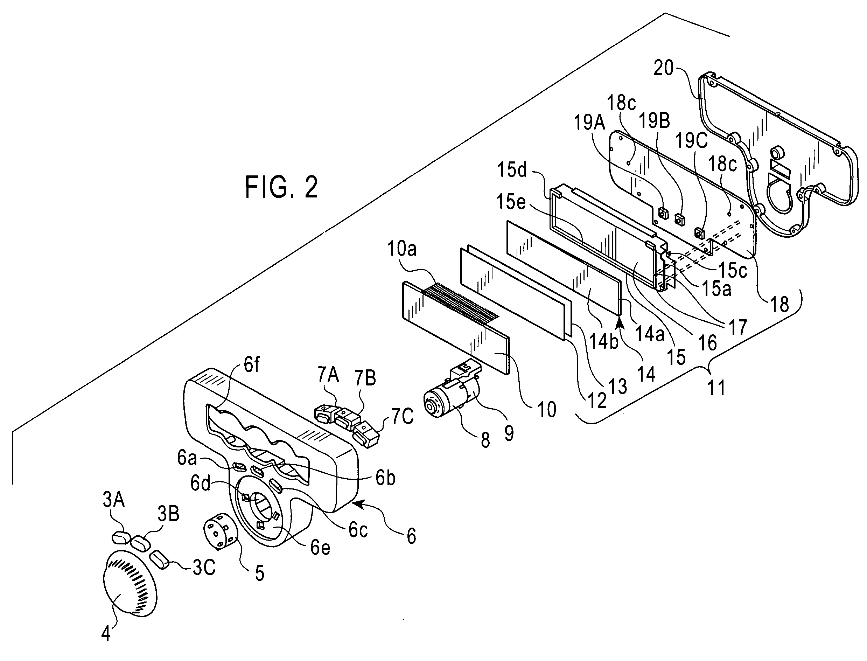

A surface light source 11 of this embodiment shown in FIGS. 2 to 4 is, for example, mounted as an edge-lighting backlight in a controller 1 of a car air conditioner shown in FIG. 1.

### <Controller>

The controller 1 will be described first.

As shown in FIG. 1, the controller 1 has a liquid crystal display device 2 that indicates control items for the car air conditioner, namely, air volume, temperature, and a setting condition of an air outlet, respectively, in first to third display areas 2A to 2C.

The controller 1 also has, near the lower sides of the first to third display areas 2A to 2C, first to third selection buttons 3A to 3C to be pressed to select any of the control items indicated in the display areas 2A to 2C. The controller 1 further has, near the lower sides of the first to third selection buttons 3A to 3C, a rotary knob 4 to be turned to change settings of the selected control item.

The controller 1 also includes a front cover 6 and a rear cover 20 that define a housing, as shown in FIG. 2. The front cover 6 includes slide holes 6a to 6c in which the first to third selection buttons 3A to 3C are slidably fitted, a recess 6e in which the rotary knob 4 is slidably fitted, a shaft hole 6d which is provided at the center of the recess 6e and in which a holder 5 for fixing the rotary knob 4 to a motor 8 is turnably fitted, and a frame 6f that defines an outline of the liquid crystal display device 2.

The housing defined by the front cover 6 and the rear cover 20 houses a circuit board (PCB) 18 to which first to third pushbutton switches 19A to 19C are electrically connected. The circuit board 18 is fixed to the rear cover 20. The first to third selection buttons 3A to 3C are held by first to third button holders 7A to 7C, respectively. That is, when the first to third selection buttons 3A to 3C are pressed, the first to third pushbutton switches 19A to 19C are pushed via the first to third button holders 7A to 7C.

Inside the housing, the above-described motor 8 is also provided to give a rotational force to the rotary knob 4. The motor 8 is provided with a rotary encoder 9 for detecting the rotation angle of an output shaft of the motor 8, that is, the rotation angle of the rotary knob 4. The rotary encoder 9 is electrically connected to the circuit board 18.

A liquid crystal panel 10 (LCD) is also provided inside the housing. The liquid crystal panel 10 has an outline defined by the frame 6f, and constitutes the liquid crystal display device 2. The liquid crystal panel 10 is electrically connected to the circuit board 18 via terminals 10a provided at an upper edge thereof, and is fitted in and held by a holder 15. The holder 15 and the circuit board 18 are fixed by snapping two snap claws 15c provided at the back of the holder 15 into two engaging holes 18c provided in the circuit board 18.

The circuit board 18 is connected to a microcomputer (not shown) that controls the car air conditioner, the liquid crystal panel 10, and the motor 8. That is, the microcomputer receives ON signals from the pushbutton switches 19A to 19C obtained by operating the first to third selection buttons 3A to 3C, and rotation-angle signals indicating the rotation angles of the rotary knob 14 detected by the rotary encoder 9, and controls the car air conditioner, the liquid crystal panel 10, and the motor 8 on the basis of the ON signals and the rotation-angle signals.

### <Surface Light Source>

The surface light source 11 of this embodiment will now be described.

As shown in FIG. 2, the surface light source 11 is provided between the liquid crystal panel 10 and the rear cover 20. The surface light source 11 includes a light guide plate 14 having a light incident surface 14a on which light is incident and a light-emitting surface 14b from which incident light from the light incident surface 14a is emitted, and a support for supporting the liquid crystal panel 10 and the light guide plate 14. For example, the support is defined by the holder 15 for holding the light guide plate 14, and the circuit board 18. The holder 15 includes a fitting frame 15d in which the liquid crystal panel 10 is fitted, and a fitting recess 15e in which the light guide plate 14 is fitted.

The surface light source 11 also includes LEDs 17 that are disposed near the light incident surface 14a of the light guide plate 14 on a side of the holder 15 (right side in FIG. 2) to illuminate the light incident surface 14a. In the surface light source 11, the circuit board 18 has an electrical circuit (not shown) for lighting the LEDs 17.

A light-diffusing sheet 12 for diffusing light in the vertical direction, and a light-diffusing sheet 13 for diffusing light in the horizontal direction are stacked on the light-emitting surface 14b of the light guide plate 14, and are stored together with the light guide plate 14 inside the fitting recess 15e of the holder 15. A reflector sheet 16 stuck on a bottom surface of the fitting recess 15e of the holder 15 reflects and returns emergent light from the rear surface of the light guide plate 14 into the light guide plate 14.

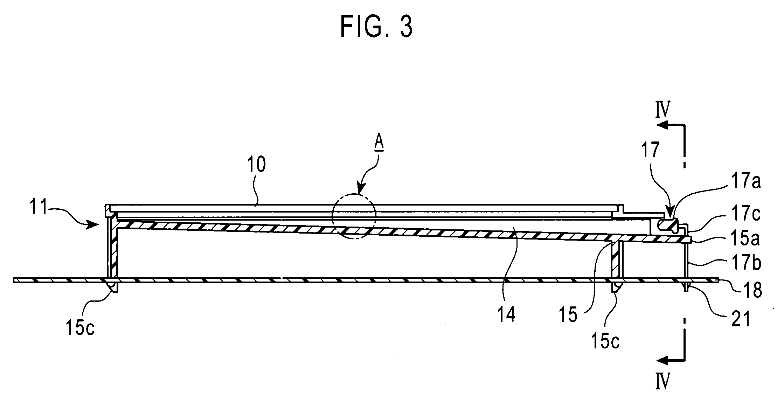

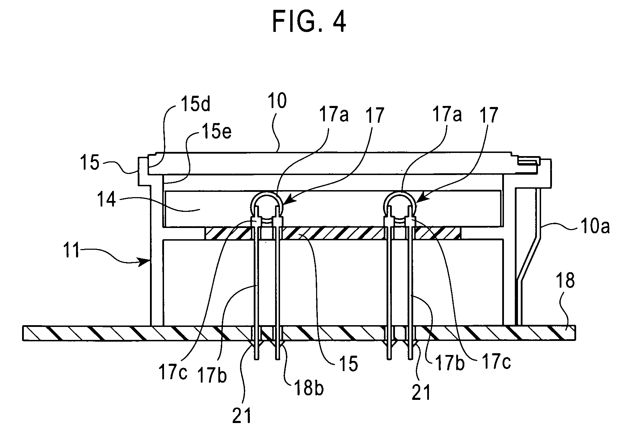

In particular, in this embodiment, each of the LEDs 17 is a discrete LED in which an LED body 17a that emits light is combined with a wire lead 17b that electrically connects the LED body 17a and the electrical circuit, as shown in FIGS. 3 and 4. A mounting portion 15a on which the LEDs 17 are mounted is provided on the side of the holder 15 (right side in FIG. 3), and the mounting portion 15a has insertion holes 15b through which the wire leads 17b extend, as shown in FIG. 4. The wire leads 17b have engaging portions 17c to be engaged with edges of the insertion holes 15b. That is, a positioning means for positioning the LEDs 17 with respect to the light guide plate 14 is constituted by the wire leads 17b, the engaging portions 17c provided in the wire leads 17b, and the insertion holes 15b provided in the mounting portion 15a of the holder 15. More specifically, the LED bodies 17a are positioned in the direction perpendicular to the light-emitting surface 14b when the engaging portions 17c abut against the surface around the insertion holes 15c and the motion thereof is regulated, and are positioned in the direction parallel to the light-emitting surface 14b when the wire leads 17b abut against the inner peripheral surfaces of the insertion holes 15b and the motion thereof is regulated.

The wire leads 17b extend through insertion holes 18b provided in the circuit board 18 corresponding to the insertion holes 15b of the mounting portion 15a, and are soldered to the circuit board 18 at soldered portions 21 shown in FIGS. 3 and 4.

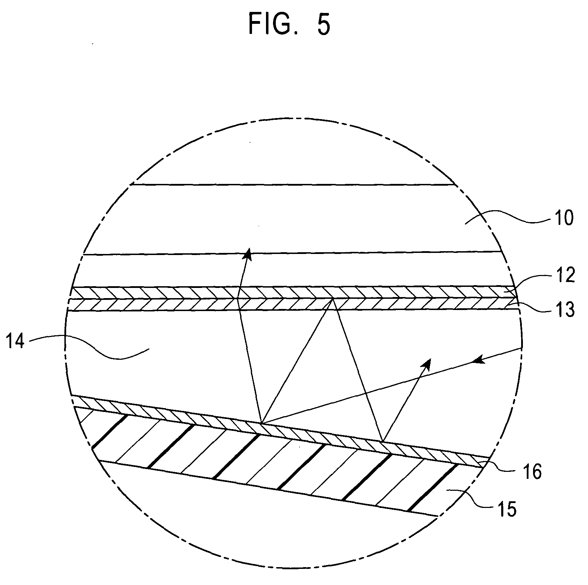

In the surface light source 11 having the above-described configuration, when light is applied from the LED bodies 17a onto the light incident surface 14a of the light guide plate 14, it is emitted from the light-emitting surface 14b, passes through the light-diffusing sheets 12 and 13, and then reaches the liquid crystal panel 10. In this case, the light inside the light guide plate 14 is controlled by reflection with the reflector sheet 16 and diffusion with the light-diffusing sheets 12 and 13 so that the luminance can be uniform over the entire liquid crystal panel 10, as shown in FIG. 5.

During assembly, the wire leads 17b of the LEDs 17 are bent in an L-shape beforehand at predetermined positions between the LED bodies 17a and the engaging portions 17c, and are cut to a size corresponding to the distance between the circuit board 18 and the mounting portion 15a of the holder 15. Subsequently, the holder 15 and the circuit board 18 are fastened by snapping the snap claws 15c of the holder 15 into the engaging holes 18c of the circuit board 18.

Next, the wire leads 17b are drawn through the insertion holes 15b of the mounting portion 15a and the insertion holes 18b of the circuit board 18, as shown in FIG. 4. The engaging portions 17c of the wire leads 17b are engaged with the edges of the insertion holes 15b of the mounting portion 15a, so that the motion of the wire leads 17b in the inserting direction is regulated, and the LED bodies 17a are positioned opposed to the light incident surface 14a of the light guide plate 14. In such a state in which the LED bodies 17a are positioned, the wire leads 17b are soldered to the rear side of the circuit board 18, thus completing mounting of the LEDs 17.

This embodiment provides the following advantages.

Each of the LEDs 17 is a discrete LED in which the LED body 17a that emits light is combined with the wire lead 17b, and the positioning means is constituted by the insertion hole 15b which is provided in the holder 15 and through which the wire lead 17b extends, and the engaging portion 17c that is provided integrally with the wire lead 17b and is engaged with the edge of the insertion hole 15b of the holder 15. That is, the LED 17 and the holder 15 include the positioning means. As a result, a special component for positioning the LED 17 is unnecessary, and therefore, the number of components is not increased.

Furthermore, since the LED 17 has the wire lead 17b, it is possible to easily respond to a change in the distance between the holder 15 and the circuit board 18 by cutting the wire lead 17b to an appropriate length without using a special component (e.g., a lead or a flexible circuit board).

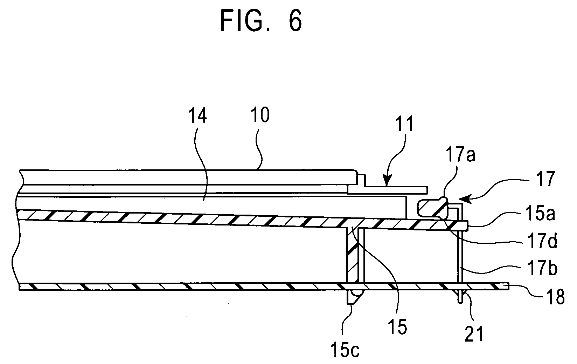

While the positioning means for positioning the LED 17 with respect to the light guide plate 14 in this embodiment is constituted by the wire lead 17b, the engaging portion 17c provided integrally with the wire lead 17b, and the insertion hole 15b provided in the mounting portion 15a of the holder 15, the present invention is not limited thereto. For example, a peripheral surface 17d of the LED body 17a may be disposed in contact with the mounting portion 15a of the holder 15, as shown in FIG. 6, and the positioning means may be constituted by the peripheral surface 17d, the wire lead 17b, and the insertion hole 15b of the mounting portion 15a.

In this positioning means, the position of the LED body 17a in the thickness direction of the light guide plate 14 is determined corresponding to at least one of the diameter of the portion of the LED body 17a including the peripheral surface 17d and the thickness of a portion of the mounting portion 15 in contact with the peripheral surface 17d of the LED body 17a.

Since this positioning means is also included in the LED 17 and the holder 15, a special component for positioning the LED 17 is unnecessary, and the number of components is not increased.

While the support is constituted by the holder 15 and the circuit board 18 in this embodiment, the present invention is not limited thereto. For example, the circuit board 18 may be omitted by providing an electrical circuit in the holder 15 and by directly fastening the holder 15 to the rear cover 20. Alternatively, the holder 15 may be omitted by stacking the liquid crystal panel 10, the light guide plate 14, the light-diffusing sheets 12 and 13, and the reflector sheet 16 on the circuit board 18 and by mounting the LEDs 17 at the insertion holes 18b of the circuit board 18 and surroundings thereof. In these cases, the wire leads 17b of the LEDs 17 are cut to a length corresponding to the thickness of the mounting portion 15a of the holder 15 or the thickness of the circuit board 18. Since the circuit board 18 or the holder 15 can be omitted in these cases, the number of components can be reduced.

While the present invention has been described with reference to what are presently considered to be the preferred embodiments, it is to be understood that the invention is not limited to the disclosed embodiments. On the contrary, the invention is intended to cover various modifications and equivalent arrangements included within the spirit and scope of the appended claims. The scope of the following claims is to be accorded the broadest interpretation so as to encompass all such modifications and equivalent structures and functions.

## Claims

1. A surface light source comprising:
a light guide plate having a light incident surface on which light is incident and a light-emitting surface from which the light is emitted;
a support for supporting the light guide plate;
a light-emitting diode disposed near the light incident surface of the light guide plate to illuminate the light incident surface, the light-emitting diode including a diode body for emitting the light, and a wire lead provided integrally with the diode body;
a positioning unit for positioning the light-emitting diode with respect to the light guide plate; and
an electrical circuit provided in the support to light the light-emitting diode,
wherein the wire lead electrically connects the diode body to the electrical circuit, and the positioning unit includes an insertion hole which is provided in the support and through which the wire lead extends, and an engaging portion provided integrally with the wire lead so as to engage with an edge of the insertion hole.

2. A surface light source comprising:
a light guide plate having a light incident surface on which light is incident and a light-emitting surface from which the light is emitted;
a support for supporting the light guide plate;
a discrete light-emitting diode disposed near the light incident surface of the light guide plate to illuminate the light incident surface, the light-emitting diode including a diode body for emitting the light, and a wire lead provided integrally with the diode body;
a positioning unit for positioning the light-emitting diode with respect to the light guide plate; and
an electrical circuit provided in the support to light the light-emitting diode,
wherein the wire lead electrically connects the diode body to the electrical circuit, and the positioning unit includes an insertion hole which is provided in the support and through which the wire lead extends, and a side face of the diode body.

3. The surface light source according to claim 1 or 2, wherein the support includes a circuit board on which the electrical circuit is provided, and a holder disposed on the circuit board to hold the light guide plate, and the diode body is electrically connected to the electrical circuit via the wire lead that extends through insertion holes provided in the holder and the circuit board.
